# EUROPÄISCHE PATENTSCHRIFT

(11) **EP 1 077 542 B1**
(45) Veröffentlichungstag und Bekanntmachung des Hinweises auf die Patenterteilung: **02.03.2005**
(21) Anmeldenummer: 00112883.4
(22) Anmeldetag: 19.06.2000
(51) Int. Cl.: H04B 10/105, H04B 7/208

(54) **Optisches Intersatelliten-Kommunikationssystem**
Optical intersatellite communication system
Système de communication optique entre satellites

(30) Priorität: 16.08.1999 CH 148799
(43) Veröffentlichungstag der Anmeldung: 21.02.2001
(73) Patentinhaber: Contraves Space AG, 8052 Zürich (CH)
(72) Erfinder: Pribil, Klaus, Dr., 8152 Glattbrugg (CH); Hunziker, Stephan, Dr., 5025 Asp (CH)
(74) Vertreter: Heusch, Christian

(56) Entgegenhaltungen:
- EP-A- 0 689 305
- US-A- 5 680 238
- PATENT ABSTRACTS OF JAPAN vol. 011, no. 195 (E-518), 23. Juni 1987 (1987-06-23) & JP 62 021334 A (NEC CORP), 29. Januar 1987 (1987-01-29)
- PATENT ABSTRACTS OF JAPAN vol. 1996, no. 03, 29. März 1996 (1996-03-29) & JP 07 312580 A (MATSUSHITA ELECTRIC IND CO LTD;OTHERS: 01), 28. November 1995 (1995-11-28)

## Beschreibung

Die vorliegende Erfindung betrifft ein optisches Intersatelliten-Kommunikationssystem nach dem Oberbegriff des Patentanspruchs **1** oder **4**.

Es sind optische Intersatelliten-Kommunikationssysteme bekannt, die mit digitalen Daten mit einer festen Bitrate von beispielsweise **1.5** GB/s +/- **3**% arbeiten, und es sind auch analoge optische Kommunikationssysteme in vielen Varianten bekannt. Die Impulsform der Signale im Fall des digitalen Systems ist immer in einem engen Toleranzbereich spezifiziert, da sonst das System nicht funktionieren kann. Ein Hauptproblem bei der kohärenten homodynen Übertragung stellt sich bei der Synchronisierung des Lokaloszillatorlasers, dessen Phase für Detektions- und Demodulationszwecke mit der empfangenen Lichtwelle verriegelt oder gelockt werden soll. Bei digitalen Systemen fester Datenrate ergibt sich ein einfachster Weg, um eine Synchronisation zu erreichen, durch Verwendung des sogenannten Syncbit-Verfahrens, bei dem der Datenstrom nach **17** Bits von Nullen" und "Einsen" ein Syncbit enthält, das sich in einem dritten Zustand "**0.5**" befindet. Bei einer Phasenmodulation (BPSK: binary phase shift keying) der Lichtwelle wird ein Datenbit "**0**" die Phase der Lichtwelle beispielsweise um -**90**° im sendeseitigen optischen Modulator modulieren, während eine "**1**" einen Betrag von **90**° zur Phase der Lichtwelle addiert. Demgegenüber addiert der "**0.5**" bzw. Syncbit den Betrag **0**° zur Phase der Lichtwelle. Der Empfänger kann dann die **0**°-Phasenzustände, das heisst die Syncbits, extrahieren und die Synchronisierung des Lokaloszillators durchführen. Es ist dabei zu beachten, dass das Syncbit von Bits symmetrischer Phasenzustände umgeben sein muss, weil es sonst im Empfänger nicht detektiert werden könnte.

Es ist nun Zweck der vorliegenden Erfindung, ein verbessertes optisches Intersatelliten-Kommunikationssystem zu schaffen.

Diese Aufgabe wird erfindungsgemäss durch ein optisches Intersatelliten-Kommunikationssystem nach Patentanspruch **1** oder **4** gelöst.

Das erfindungsgemässe System gestattet demzufolge die Übertragung nahezu beliebiger analoger und digitaler Signale variabler Datenrate bis zu einer bestimmten Bandbreite über optische Intersatelliten-Links, und zwar im Gegensatz zu bekannten Systemen, die nur die Übertragung von digitalen Signalen einer fest gegebenen Datenrate erlauben.

Vorteilhafte Ausgestaltungen der Erfindung sind in den abhängigen Ansprüchen angegeben.

Nachfolgend wird die Erfindung beispielsweise an Hand einer Zeichnung näher erläutert. Dabei zeigt
**Fig. 1** eine schematische Darstellung des Sendeteils eines optischen Intersatelliten-Kommunikationssystems nach der Erfindung, und
**Fig. 2** eine schematische Darstellung des Empfangsteils eines solchen optischen Intersatelliten-Kommunikationssystems.

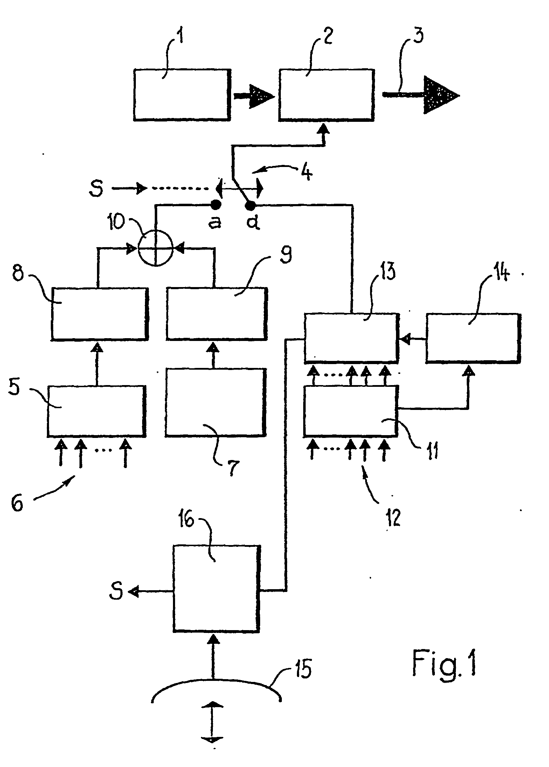

Der in **Fig. 1** dargestellte Sendeteil eines optischen Intersatelliten-Kommunikationssystems nach der Erfindung umfasst einen sendeseitigen TX-Laser **1** mit einem optischen Modulator **2** zum Aussenden eines modulierten Laserstrahls **3**, sowie je eine analoge und eine digitale Einrichtung, die wahlweise über einen Umschalter **4** an den optischen Modulator **2** anschliessbar sind. Die analoge Einrichtung weist eine analoge Signalverarbeitungsstufe **5** mit mehreren analogen Eingängen **6** und eine analoge mit einem niederfrequenten Synchronisierrahmen arbeitende Synchronisiervorrichtung **7** auf. Dabei sind ausgangsseitig die Verarbeitungsstufe **5** über ein Bandpass-Filter **8** und die analoge Synchronisiervorrichtung **7** über ein Tiefpass/Bandpass-Filter **9** mit einer analogen Hochfrequenz-Verknüpfungsschaltung (Combiner) **10** verbunden, deren Ausgang mit der einen Position "a" des Umschalters **4** verbunden ist. Die digitale Einrichtung weist eine digitale Signalverarbeitungsstufe **11** mit mehreren digitalen Eingängen **12** auf, welche ausgangsseitig über einen Rahmen-Multiplexer **13** mit der anderen Position "d" des Umschalters **4** verbunden ist. Zwischen der digitalen Signalverarbeitungsstufe **11** und dem Rahmen-Multiplexer **13** ist eine digitale mit einem hochfrequenten Synchronisierrahmen arbeitende Synchronisiervorrichtung **14** eingefügt. Der Sendeteil kann auch einen an eine Antenne **15** angeschlossenen Prozessor **16** aufweisen, der ein Steuersignal **S** für den Umschalter **4** liefert, wobei für die Steuerung dieses Umschatters **4** auch andere Mittel vorhanden sein können. Der Combiner **10** kann ein einfaches angepasstes resistives Netzwerk sein.

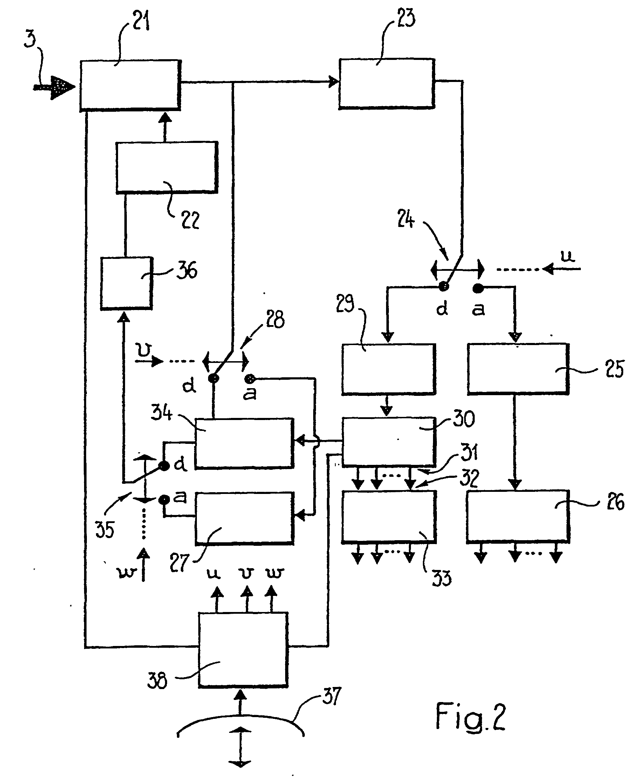

Der in **Fig. 2** dargestellte Empfangsteil eines "transparenten" optischen Intersatelliten-Kommunikationssystems nach der Erfindung umfasst einen empfangsseitigen optischen RX-Empfänger **21** mit einem Lokaloszillatorlaser **22**, wobei an den RX-Empfänger **21** ausgangsseitig eine Tiefpass-Filter-Einheit **23** angeschlossen ist, sowie je eine analoge und eine digitale Einrichtung, die wahlweise über einen empfangsseitigen Datensignal-Umschalter **24** an die Tiefpas-Filter-Einheit **23** anschliessbar sind. An die eine Position "a" des Umschalters **24** ist über ein Bandpass-Filter **25** eine analoge Signalverarbeitungsstufe **26** angeschlossen, welche die analogen Ausgangssignale liefert. Zusätzlich zu diesen zwei Elementen **25**, **26** umfasst die analoge Einrichtung des Empfangsteils noch eine analoge Synchronisiervorrichtung **27**, deren Eingang mit der einen Position "a" eines ersten an den Ausgang des optischen RX-Empfängers **21** angeschlossenen Synchronisier-Umschalters **28** verbunden ist.

An die andere Position "d" des Datensignal-Umschalters **24** ist über eine CDR-Schaltung (Clock/Data Recovery) **29** ein Demultiplexer **30** angeschlossen, deren Ausgänge **31** mit den Eingängen **32** einer digitalen Verarbeitungsstufe **33** verbunden sind, welche die digitalen Ausgangssignale liefert, wobei zu diesen drei Elementen **29**, **30**, **33** der digitalen Einrichtung des Empfangsteils noch eine digitale vorzugsweise mit dem Demultiplexer **30** verbundene Synchronisiervorrichtung **34** hinzukommt. Im Empfangsteil ist noch ein zweiter Synchronisier-Umschalter **35** mit zwei Positionen "a" bzw. "d" vorhanden, um wahlweise den Ausgang der analogen Synchronisiervorrichtung **27** oder der digitalen Synchronisiervorrichtung **34** über ein Tiefpass-Filter **36** mit dem Eingang des Lokaloszillatorlasers **22** verbinden zu können. Auch in diesem Fall arbeitet die digitale Synchronisiervorrichtung **34** mit einem hochfrequenten Synchronisierrahmen. Der Empfangsteil kann auch einen an eine Antenne **37** angeschlossenen Prozessor **38** aufweisen, der Steuersignale **u, v, w** für die Umschalter **24**, **28** und **35** liefert, wobei für die Steuerung dieser Umschalter auch andere Mittel vorhanden sein können.

Die erfindungsgemässe Anordnung ist vorgesehen, um wahlweise als digitales System mit einer festen Bitrate oder als analoges System zu arbeiten. Im digitalen Unterteil des Empfangsteils können die CDR-Schaltung (Clock and data recovering) **29**, der Demultiplexer **30** und andere Signalverarbeitungsteile entsprechende Elemente aus dem Stand der Technik sein. Das erfindungsgemässe Verfahren sieht vor, dass die Bandbreite des zu übertragenden Signals **3** in zwei Teile getrennt sind. Es wird somit einerseits ein Synchronisationskanal mit einer kleinen Bandbreite zwischen **0** und einigen MHz für einen Synchronisationsrahmen fester Datenrate reserviert, welcher Daten, das heisst Nullen und Einsen, und Syncbits im Zustand "**0.5**" für den Empfängerlokaloszillator enthält, und man verfügt andererseits über eine grosse Bandbreite beispielsweise zwischen etwa **10** MHz und **1** GHz für den "transparenten Link". Innerhalb dieses transparenten Bandes kann jedes Signal, das spektral darin passt, unabhängig von seiner Form durch einen solchen transparenten Link übertragen werden. Die Synchronisierung erfolgt auf jeden Fall durch den schmalen Kanal unterhalb des transparenten Kanals. Der Synchronisationskanal muss einen Rahmen mit Syncbits und Datenbits in symmetrischen Zuständen aufweisen, damit der Lokaloszillator den Synchronisationszustand erreichen kann.

Durch die Antennen **15** und/oder **37** kann ein Mikrowellen-Link zur Erde bestehen, von wo aus der Modus bestimmt werden kann. Der Modus kann jedoch auch zwischen den Satelliten bestimmt werden. Wenn die Signale, die der Prozessor **38** vom Demultiplexer **30** und vom optischen RX-Empfänger **21** erhält in Ordnung sind, wird der digitale Betrieb aufrechterhalten, anderenfalls wird auf "analog" umgeschaltet. In den Satelliten sind normalerweise sowohl ein Sendeteil wie ein Empfangsteil vorhanden, so dass in jedem Satelliten ein Prozessor **38** (**Fig. 2**) sein kann. Die Vorrichtungen **27** und/oder **34** können auch mit dem Prozessor **38** und/oder mit den Schaltungen **26** bzw. **33** verbunden sein.

Ein Vorteil der vorliegenden Erfindung besteht darin, dass der analoge Teil grundsätzlich als bandbegrenzter transparenter Kanal ausgebildet sein kann, so dass er keiner Signal- oder Datenverarbeitung bzw. Signal-Rückgewinnung bedarf ausser für einen spektral getrennten Synchronisations- und Signalisierungs-Kanal oder ein anderes analoges Basisbandverfahren. In den Figuren **1** und **2** sind alle Umschalter jeweils in der für einen digitalen Betrieb vorgesehenen Position "d" dargestellt. Für den analogen Betrieb muss man alle Umschalter in die Position "a" bringen. Wegen der unterschiedlichen Ausgestaltung der OPLL-Synchronisierung (optical phase-lock loop), des Taktgebers, der Datenrückgewinnung, der Rahmenorganisierung und der Filter für die analogen und die digitalen Teile können diese Elemente vorzugsweise in verschiedenen umschaltbaren Modulen untergebracht werden.

Das erfindungsgemässe System, das zwei Betriebsmodi erlaubt, kann nicht nur digitale Signale mit einer festen Datenrate, sondern auch analoge Signale übertragen. Durch die vorliegende Erfindung kann daher die Empfindlichkeit eines Intersatelliten-Kommunikationssystems im Vergleich zu den analogen Systemen verbessert werden, die einige dB weniger empfindlich als die digitalen sind. Einige Schaltungseinheiten oder Blöcke werden in beiden Betriebsarten oder Modi verwendet, andere hingegen können je nach Modus umgeschaltet werden. Das System nach der vorliegenden Erfindung ist daher "transparent".

Der Unterschied zwischen dem Digitalbetrieb und dem Analogbetrieb liegt in den verschiedenen verwendeten optischen Phasenverriegelungsschleifen für die Synchronisation oder OPLL-Schleifen (optical phase-lock loop synchronisation). In einem System mit einer festen Datenrate wird die OPLL-Schleife mit Hilfe von die Länge eines Datenbits aufweisenden sogenannten Syncbits durchgeführt, die jeweils nach einer vorbestimmten Anzahl - gewöhnlich **17** - Datenbits eingefügt werden. In analogem Betrieb wird ein Synchronisationsrahmen kleiner Bitrate mit den Syncbits und anderen Hilfsdaten übertragen, und zwar spektral getrennt von den eigentlichen Nutzdaten. Nach der vorliegenden Erfindung unterscheiden sich also beide Betriebsarten nur in der Syncbit-Verarbeitung, in einigen Filterfunktionen und in der Verarbeitung des Empfangssignals, wie zum Beispiel bei der Takt- und Daten-Rückgewinnung im Digitalbetrieb mit einer festen Datenrate.

Da das erfindungsgemässe System ausgebildet ist, um beliebige Signale zu übertragen, werden vorzugsweise höhere Anforderungen an Linearität gestellt als bei Anwendung für digitale Signale mit einer festen Übertragungsrate. Wenn bespielsweise zwei Hauptträgersignale der Frequenz **f1** bzw. **f2** und ein weiteres Trägersignal der Frequenz **f3** = **2.f2** - **f1** übertragen werden, wird durch eine System-Nichtlinearität ungerader Ordnung ein Intermodulationsprodukt der Frequenz **f3** erzeugt. In einem digitalen System fester Datenrate oder in einem in digitalem Betrieb arbeitenden System nach der vorliegenden Erfindung bewirken solche statischen Nichtlinearitäten, und zwar sogar auch wenn sie sehr stark sind wie bei Verwendung von Begrenzern, keine Einbusse der Übertragungsqualität. Die digitalen Systeme fester Datenrate müssen allerdings rauscharm sein, um grosse Reichweiten zu erreichen. Die analogen Systeme müssen jedoch zugleich rauscharm und sehr linear sein, das heisst sie müssen einen hohen dynamischen Bereich aufweisen.

Um eine hohe Empfindlichkeit zu erreichen, wird nach der vorliegenden Erfindung vorzugsweise eine kohärente optische Phasenmodulation für beide Fälle verwendet. Bei Systemen mit festen Datenraten spricht man dann von einer kohärenten BPSK-Modulation (coherent binary phase shift keying) im Gegensatz zu einer kohärenten Phasenmodulation (coherent PM) im analogen Fall. Bei kohärenter Übertragung muss der Empfänger mit Hilfe eines Lokaloszillators die empfangene phasenmodulierte Lichtwelle zu einer Zwischenfrequenz heruntermischen. Wenn diese Zwischenfrequenz Null ist, wird gemäss dem sogenannten Homodynverfahren die Lichtwelle nach Mischung mit dem Lokaloszillatorsignal direkt mit Hilfe eines Photodetektors demoduliert. Vorzugsweise wird nach der vorliegenden Erfindung in beiden Fällen - analog und digital - dieses Homodynverfahren verwendet, da es das empfindlichste ist.

Die Datenbits im Synchronisationskanal sind unabhängig von der über den Link zu übertragendenden Information, die über den transparenten Kanal übertragen wird. Das Syncbit-Verfahren kann mit Hilfe von FPGA-Arrays (field programmable gate arrays) durchgeführt werden, die merklich kostengünstiger als die RFASIC-Schaltungen (radio frequency application specific integrated circuits) zur Syncbit-Verarbeitung in digitalen Systemen fester Datenrate notwendig sind.

Zur Erhöhung des dynamischen Bereichs des Links kann der optische Phasenmodulator, wo hauptsächlich die Nichtlinearität entsteht, mit Hilfe einer elektronischen breitbandigen Vordistorsions-Linearisierer-Schaltung linearisiert werden, die zur Kompensation der sinusförmigen Charakteristik des Mischungs/Detektions-Prozesses eine Arcsin-Übertragungscharakteristik aufweist.

Das System nach der vorliegenden Erfindung kann auch derart ausgebildet sein, dass es in "Normalbetrieb" digital arbeitet und wenn jeweils in einer vorgegebenen Zeitspanne von beispielsweise 1 Minute keine Synchronisation erreicht werden kann, automatisch auf "analog" umgeschaltet wird.

## Patentansprüche

1. Optisches Intersatelliten-Kommunikationssystem mit einem Sendeteil, der einen sendeseitigen TX-Laser **(1)** und einen optischen Modulator **(2)** zum Aussenden eines moduüerten Laserstrahls **(3)** umfasst,
**dadurch gekennzeichnet, dass**
dieser Sendeteil je eine analoge (**5**, **7**, **8**, **9**, **10**) und eine digitale Einrichtung (**11**, **13**, **14**) umfasst, die wahlweise über einen sendeseitigen Umschalter (**4**) an den optischen Modulator (**2**) anschliessbar sind.

2. Optisches Intersatelliten-Kommunikationssystem nach Anspruch **1**,
**dadurch gekennzeichnet, dass**
die analoge Einrichtung eine analoge Signalverarbeitungsstufe (**5**) mit mehreren analogen Eingängen (**6**) und eine analoge mit einem niederfrequenten Synchronisierrahmen arbeitende Synchronisiervorrichtung (**7**) aufweist, und/oder dass die digitale Einrichtung eine digitale Signalverarbeitungsstufe (**11**) mit mehreren digitalen Eingängen (**12**) aufweist, wobei zwischen der digitalen Signalverarbeitungsstufe (**11**) und einem Rahmen-Multiplexer (**13**) eine digitale mit einem hochfrequenten Synchronisierrahmen arbeitende Synchronisiervorrichtung **(14)** eingefügt ist.

3. Optisches Intersatelliten-Kommunikationssystem nach Anspruch **2**,
**dadurch gekennzeichnet, dass**
ausgangsseitig die analoge Verarbeitungsstufe (**5**) über ein Filter (**8**) und die analoge Synchronisiervorrichtung (**7**) über ein Filter (**9**) mit einer analogen Hochfrequenz-Verknüpfungsschaltung (Combiner) (**10**) verbunden sind, deren Ausgang mit der einen Position "a" des sendeseitigen Umschalters (**4**) verbunden ist, und dass die digitale Signatverar beitungsstufe **(11)** ausgangsseitig über den Rahmen-Multiplexer **(13)** mit der anderen Position "d" dieses Umschalters (**4**) verbunden ist.

4. Optisches Intersatelliten-Kommunikationssystem mit einem Empfangsteil, der einen empfangsseitigen optischen RX-Empfänger (**21**) und einem Lokaloszillator (**22**) umfasst,
**dadurch gekennzeichnet, dass**
an den RX-Empfänger (**21**) ausgangsseitig eine Filter-Einheit (**23**) angeschlossen ist, an die wahlweise über einen empfangsseitigen Datensignal-Umschalter (**24**) eine analoge (**25**, **26**, **27**) oder eine digitale Einrichtung (**29**, **30**, **33**, **34**) anschliessbar sind.

5. Optisches Intersatelliten-Kommunikationssystem nach Anspruch **4**,
**dadurch gekennzeichnet, dass**
an die eine Position "a" des empfangsseitigen Datensignal-Umschalters (**24**) über ein Filter (**25**) eine analoge Signalverarbeitungsstufe (**26**) angeschlossen ist, welche die analogen Ausgangssignale liefert, dass der Empfangsteil zusätzlich eine analoge Synchronisiervorrichtung (**27**) umfasst, deren Eingang mit der einen Position "a" eines ersten an den Ausgang des optischen RX-Empfängers (**21**) angeschlossenen Synchronisier-Umschalters (**28**) verbunden ist, dass an die andere Position "d" des Datensignal-Umschalters (**24**) über eine CDR-Schaltung (Clock and data recovery) (**29**) ein Demultiplexer (**30**) angeschlossen ist, deren Ausgänge (**31**) mit den Eingängen (**32**) einer digitalen Verarbeitungsstufe (**33**) verbunden sind, welche die digitalen Ausgangssignale liefert, und dass eine digitale mit dem Demultiplexer (**30**) verbundene Synchronisiervorrichtung (**34**) vorhanden ist.

6. Optisches Intersatelliten-Kommunikationssystem nach Anspruch **5**,
**dadurch gekennzeichnet, dass**
im Empfangsteil ein zweiter Synchronisier-Umschalter (**35**) mit zwei Positionen "a" bzw. "d" vorhanden ist, um wahlweise den Ausgang der analogen Synchronisiervorrichtung (**27**) oder der digitalen Synchronisiervorrichtung (**34**) über ein Filter (**36**) mit dem Eingang des Lokaloszillators (**22**) zu verbinden.

7. Optisches Intersatelliten-Kommunikationssystem mit einem Sendeteil, der einen sendeseitigen TX-Laser (**1**) und einen optischen Modulator (**2**) zum Aussenden eines modulierten Laserstrahls (**3**) umfasst, und mit einem Empfangsteil, der einen empfangsseitigen optischen RX-Empfänger (**21**) und einen Lokaloszillator (**22**) aufweist,
**dadurch gekennzeichnet, dass**
der Sendeteil je eine analoge (**5**, **7**, **8**, **9**, **10**) und eine digitale Einrichtung (**11**, **13**, **14**) umfasst, die wahlweise über einen sendeseitigen Umschalter (**4**) an den optischen Modulator (**2**) anschliessbar sind, und im Empfangsteil an den RX-Empfänger (**21**) ausgangsseitig eine Filter-Einheit (**23**) angeschlossen ist, an die wahlweise über einen empfangsseitigen Datensignal-Umschalter (**24**) eine analoge (**25**, **26**, **27**) oder eine digitale Einrichtung (**29**, **30**, **33**, **34)** anschliessbar sind.

8. Optisches Intersatelliten-Kommunikationssystem nach Anspruch 7,
**dadurch gekennzeichnet, dass**
der Sendeteil einen an eine Antenne (**15**) angeschlossenen Prozessor (**16**) aufweist, der ein Steuersignal (**S**) für den sendeseitigen Umschalter (**4**) liefert und/oder dass der Empfangsteil einen an eine Antenne (**37**) angeschlossenen Prozessor (**38**) aufweist, der Steuersignale (**u**, **v**, **w**) für die empfangsseitigen Umschalter (**24**, **28**, **35**) liefert.

9. Optisches Intersatelliten-Kommunikationssystem nach Anspruch 7,
**dadurch gekennzeichnet, dass**
die Bandbreite des zu übertragenden Signals (**3**) einerseits einen Synchronisationskanal mit einer kleinen Bandbreite umfasst, die für einen Synchronisationsrahmen fester Datenrate reserviert wird, welcher Daten und Syncbits für den Empfängerlokaloszillator enthält, und andererseits eine grosse Bandbreite für einen transparenten Link umfasst, und dass die Synchronisierung durch den schmalen Kanal unterhalb des transparenten Kanals erfolgt.

10. Optisches Intersatelliten-Kommunikationssystem nach einem der Ansprüche **1** bis **9**,
**dadurch gekennzeichnet, dass** der optische Phasenmodulator mit Hilfe einer elektronischen breitbandigen Vordistorsions-Linearisierer-Schaltung linearisiert wird, indem sie zur Kompensation der sinusförmigen Charakteristik des Mischungs/Detektions-Prozesses eine Arcsin-Übertragungscharakteristik aufweist.

## Claims

1. Optical inter-satellite communication system with a transmitting part including a transmission-side TX laser **(1)** and an optical modulator **(2)** for emission of a modulated laser beam **(3),**
**characterized in that**
this transmitting part comprises in each case an analogue device **(5, 7, 8, 9, 10)** and a digital device **(11, 13, 14)** which can be connected according to choice via a transmission-side switch **(4)** to the optical modulator **(2)**.

2. Optical inter-satellite communication system according to Claim **1**,
**characterized in that**
the analogue device displays an analogue signal processing stage **(5)** with several analogue inputs **(6)** and an analogue synchronizer device **(7)** operating with a low-frequency synchronization frame and/or that the digital device displays a digital signal processing stage **(11)** with several digital inputs **(12)**, a digital synchronizer device **(14)** operating with a high-frequency synchronization frame being interposed between the digital signal processing stage **(11)** and a frame multiplexer **(13).**

3. Optical inter-satellite communication system according to Claim **2,**
**characterized in that**
on the output side, the analogue signal processing stage **(5)** is connected via a filter **(8)** and the analogue synchronizer device **(7)** via a filter **(9)** to an analogue high-frequency combining circuit (combiner) **(10)** whose output is connected to one position, "a", of the transmission-side switch **(4)**, and that the digital signal processing stage **(11)** is connected on the output side via the frame multiplexer **(13)** to the other position, "d", of this switch **(4)**.

4. Optical inter-satellite communication system with a reception part comprising a reception-side optical RX receiver **(21)** and a local oscillator laser **(22), characterized in that**
the RX receiver **(21)** is connected on the output side to a filter unit **(23)** to which can be connected alternatively an analogue **(25, 26, 27)** or digital **(29, 30, 33, 34)** device via a reception-side data signal switch **(24).**

5. Optical inter-satellite communication system according to Claim 4,
**characterized in that**
position "a" of the reception-side data signal switch **(24)** has connected to it via a filter **(25)** an analogue signal processing stage **(26)** which provides the analogue output signal, that the reception part further comprises an analogue synchronizing device **(27)** whose input is connected to one position, "a", of a first synchronization switch **(28)** connected to the output of the optical RX receiver **(21),** that the other position, "d", of the data signal switch **(24)** is connected via a CDR (clock and data recovery) circuit **(29)** to a demultiplexer **(30)** whose outputs **(31)** are connected to the inputs **(32)** of a digital processing stage **(33)** which emits the digital output signals, and that a digital synchronizing device **(34)** connected to the demultiplexer **(30)** is also present.

6. Optical inter-satellite communication system according to Claim 5,
**characterized in that**
in the reception part, there is a second synchronizing switch **(35)** with two positions, "a" and "d", so that the output of the analogue synchronizing device **(27)** or of the digital synchronizing device **(34)** can be connected alternatively to the input of the local oscillator laser **(22)** via a filter **(36).**

7. Optical inter-satellite communication system with a transmission part incorporating a transmission-side TX laser **(1)** and an optical modulator **(2)** for transmission of a modulated laser beam **(3)**, and with a reception part incorporating a reception-side RX receiver **(21)** and a local oscillator laser **(22)**,
**characterized in that**
the transmitting part comprises in each case an analogue device **(5, 7, 8, 9, 10)** and a digital device **(11, 13, 14)** which can be connected according to choice via a transmission-side switch **(4)** to the optical modulator **(2),** and in the reception part a filter unit **(23)** is connected to the output side of an RX receiver **(21),** which can be connected alternatively to an analogue **(25, 26, 27)** or digital **(29, 30, 33, 34)** device through a reception-side data signal switch **(24)**.

8. Optical inter-satellite communication system according to Claim 7,
**characterized in that**
the transmission part possesses a processor **(16)**, connected to an antenna **(15)**, which sends a control signal **(S)** for the transmission-side switch **(4)** and/or that the reception part possesses a processor **(38)**, connected to an antenna **(37)**, which sends control signals **(u, v, w)** to the reception-side switches **(24, 28, 35)**.

9. Optical inter-satellite communication system according to Claim 7,
**characterized in that**
the bandwidth of the signal **(3)** to be transmitted includes first a synchronization channel of small band width reserved for a fixed bit-rate synchronization frame which contains data and sync bits for the receiving local oscillator, and secondly a broad band width for a transparent link, and that synchronization is carried out through the narrow channel below the transparent channel.

10. Optical inter-satellite communication system according to one of Claims **1** to **9**,
**characterized in that**
the optical phase modulator is linearized by means of an electronic broad-band predistortion linearization circuit, displaying an arc-sine transmission characteristic to compensate for the sinusoidal characteristic of the mixing/detection process.

## Revendications

1. Système de communication optique entre satellites avec une partie émettrice qui comprend un laser émetteur **(1)** du côté de l'émission et un modulateur optique **(2)** pour émettre un faisceau laser modulé **(3)**,
**caractérisé en ce que**
cette partie émettrice comprend dans chaque cas un dispositif analogique **(5, 7, 8, 9, 10)** et un dispositif numérique **(11, 13, 14)** qui, au choix, peuvent être connectés au modulateur optique **(2)**, grâce à un commutateur **(4)** du côté de l'émission.

2. Système de communication optique entre satellites selon la revendication 1,
**caractérisé en ce que**
le dispositif analogique présente un stade analogique de traitement du signal **(5)** avec plusieurs entrées analogiques **(6)** et un dispositif analogique de synchronisation **(7)** fonctionnant avec une trame de synchronisation basse fréquence et/ou **en ce que** le dispositif numérique présente un stade numérique de traitement du signal **(11)** avec plusieurs entrées numériques **(12)**, un dispositif numérique de synchronisation **(14)** fonctionnant avec une trame de synchronisation haute fréquence étant inséré entre le stade numérique de traitement du signal **(11)** et un multiplexeur de trame **(13)**.

3. Système de communication optique entre satellites selon la revendication 2,
**caractérisé en ce que**
le stade analogique de traitement du signal **(5)** et le dispositif analogique de synchronisation **(7)** sont reliés à leur sortie, respectivement par un filtre **(8)** et par un filtre **(9)**, avec un combineur analogique haute fréquence **(10)** dont la sortie est reliée à une position "a" du commutateur **(4)** du côté de l'émission et **en ce que** le stade numérique de traitement du signal **(11)** est relié par sa sortie avec l'autre position "d" de ce commutateur **(4),** par l'intermédiaire du multiplexeur de trame **(13)**.

4. Système de communication optique entre satellites avec une partie réceptrice qui comprend un récepteur optique **(21)** du côté de la réception et un laser oscillateur local **(22)**,
**caractérisé en ce que**
le récepteur optique **(21)** est connecté par sa sortie à une unité de filtrage **(23),** à laquelle on peut connecter au choix un dispositif analogique **(25, 26, 27)** ou un dispositif numérique **(29, 30, 33, 34)** par l'intermédiaire d'un commutateur de signal de données **(24)** du côté de la réception.

5. Système de communication optique entre satellites selon la revendication 4,
**caractérisé en ce que**
un stade analogique de traitement du signal **(26)** est connecté par l'intermédiaire d'un filtre **(25)** à une position "a" du commutateur de signal de données **(24)** du côté de la réception, et il fournit les signaux analogiques de sortie, **en ce que** la partie réceptrice comprend en outre un dispositif analogique de synchronisation **(27)** dont l'entrée est reliée à une position "a" d'un premier commutateur de synchronisation **(28)** connecté à la sortie du récepteur optique **(21)**, **en ce qu'**un démultiplexeur **(30)** est relié à l'autre position "d" du commutateur de signal de données **(24)** par l'intermédiaire d'un circuit CDR (*Clock*/*Data Recovery*) **(29),** les sorties **(31)** de ce démultiplexeur **(30)** étant reliées aux entrées **(32)** d'un stade numérique de traitement **(33)** qui fournit les signaux numériques de sortie, et **en ce qu'**existe un dispositif numérique de synchronisation **(34)** relié au démultiplexeur **(30)**.

6. Système de communication optique entre satellites selon la revendication 5,
**caractérisé en ce que**
un deuxième commutateur de synchronisation **(35)** avec deux positions "a" et/ou "d" est présent dans la partie réceptrice, afin de pouvoir relier au choix la sortie du dispositif analogique de synchronisation **(27)** ou du dispositif numérique de synchronisation **(34)** avec l'entrée du laser oscillateur local **(22)** à travers un filtre **(36)**.

7. Système de communication optique entre satellites avec une partie émettrice comprenant un laser émetteur **(1)** du côté de l'émission et un modulateur optique **(2)** pour émettre un faisceau laser modulé **(3)** et avec une partie réceptrice présentant un récepteur optique **(21**) du côté de la réception et un laser oscillateur local **(22),**
**caractérisé en ce que**
la partie émettrice comprend dans chaque cas un dispositif analogique **(5, 7, 8, 9, 10)** et un dispositif numérique **(11, 13, 14)** qui, au choix, peuvent être connectés au modulateur optique **(2)** par l'intermédiaire d'un commutateur **(4)** du côté de l'émission, et dans la partie réceptrice une unité de filtrage **(23)** connectée à la sortie du récepteur optique **(21)**, à laquelle peuvent être connectés, grâce à un commutateur de signal de données **(24)** du côté de la réception, soit un dispositif analogique **(25, 26, 27)** soit un dispositif numérique **(29, 30, 33, 34).**

8. Système de communication optique entre satellites selon la revendication 7,
**caractérisé en ce que**
la partie émettrice présente un processeur **(16)** relié à une antenne **(15)** qui fournit un signal de commande **(S)** au commutateur **(4)** du côté de l'émission et/ou **en ce que** la partie réceptrice présente un processeur **(38)** relié à une antenne **(37)** qui fournit des signaux de commande **(u, v, w)** aux commutateurs **(24, 28, 35)** du côté de la réception.

9. Système de communication optique entre satellites selon la revendication 7,
**caractérisé en ce que**
la bande passante du signal à transmettre **(3)** comprend d'une part un canal de synchronisation avec une bande passante faible réservée pour une trame de synchronisation de flux de données déterminés, qui contient des données et des bits de synchronisation pour l'oscillateur local du récepteur, et d'autre part une bande passante élevée pour un lien transparent, et **en ce que** la synchronisation se produit par le canal étroit au-dessous du canal transparent.

10. Système de communication optique entre satellites selon l'une des revendications 1 à 9,
**caractérisé en ce que**
le modulateur de phase optique est linéarisé grâce à un circuit de linéarisation par pré-distorsion électronique à large bande, celui-ci présentant une caractéristique de transmission arcsin pour compenser la caractéristique sinusoïdale du processus de mélange/détection.
